# EUROPÄISCHE PATENTANMELDUNG

(11) **EP 0 807 834 A1**
(43) Veröffentlichungstag der Anmeldung: **19.11.1997**
(21) Anmeldenummer: 97107547.8
(22) Anmeldetag: 07.05.1997
(51) Int. Cl.: G02B 6/12

(54) **Mittels Ionenimplantation hergestellter Wellenleiter**

(30) Priorität: 15.05.1996 DE 19619568
(71) Anmelder: FORSCHUNGSZENTRUM JÜLICH GMBH, 52425 Jülich (DE)
(72) Erfinder: Bauer, Stephanie, Dr., 94315 Straubing (DE); Beckers, Lutz, 50968 Köln (DE); Buchal, Christoph, Dr., 52428 Jülich (DE); Fluck, Daniel, Dr., 8442 Hettlingen (CH); Günter, Peter, Prof., Dr., 8173 Riedt b/Neerach (CH)

(57) **Zusammenfassung**

Die Erfindung betrifft einen Wellenleiter (33) oder Streifenleiter mit einer oder mehreren in einem Substrat (34) (Kristall) mit Hilfe von Ionen ausgebildeten, schrägen (d.h. von senkrecht oder waagerecht zur Kristalloberfläche verschiedener Orientierung) Wandungen (37). Vorzugsweise kann der Wellenleiter oder Streifenleiter eine oder mehrere im Kristall vollständig durch Ionen ausgebildete Wandungen aufweisen.

## Beschreibung

Die Erfindung betrifft einen Wellen-, insbesondere Streifenleiter, gemäß dem Oberbegriff des Anspruchs 1. Desweiteren betrifft die Erfindung ein Verfahren zu seiner Herstellung gemäß dem Oberbegriff des Anspruchs 4. Schließlich betrifft die Erfindung eine für die Herstellung geeignete Maske gemäß dem Oberbegriff des Anspruchs 8.

Als Stand der Technik bekannt sind Lichtleiter im Bereich der modernen Optokommunikation, wobei Licht durch Glasfasern geleitet wird um Information zu transportieren. Neben den Glasfasern werden auch planare Strukturen mit eingeschriebenen 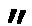 integrierten 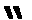 Wellenleitern benötigt, um eine Vielzahl von Funktionen zu ermöglichen. Dabei kann es sich zum Beispiel um Pfadschalter, Multiplexer und Demultiplexer, Modulatoren, optische Verstärker und nichtlineare Funktionen wie Frequenzverdoppelung, parametrische Verstärkung und Phasenkonjugation handeln.

Für viele dieser Funktionen sind die ferroelektrischen Oxide besonders gut geeignet. In den meisten der ferroelektrischen Oxide ist es jedoch sehr schwierig oder sogar unmöglich, einen optischen Streifenwellenleiter ausreichend hoher Qualität durch Diffusion oder Ionenaustausch herzustellen. Nur in wenigen Kristallen ist es mit vergleichsweise hohem Aufwand möglich, durch lokales Dotieren mit speziellen Ionen den Brechungsindex zu erhöhen und damit einen Wellenleiter zu erzeugen.

Besonders erfolgreich ist einerseits die Eindiffusion von Titan (Ti) in LiNbO₃; andererseits bietet sich die Implantation von Ti in LiNbO₃ mit anschließendem Temperschritt an. Im Ti-dotierten Bereich ist der Brechungsindex angehoben, während zugleich die erwünschten optischen Eigenschaften des LiNbO₃ erhalten bleiben. Solche Ti-LiNbO₃-Wellenleiter stellen zur Zeit die besten optischen Wellenleiter in ferroelektrischen Oxiden dar.

Aber fast alle anderen ferroelektrischen Oxide sind diesem Verfahren nicht zugänglich, weil die Fremdionen-Diffusionskonstanten und die thermische Beständigkeit nicht ausreichen. Auch das Zwangsdotieren mit Hilfe der Ionenimplantation hilft nicht weiter, denn die Ionenimplantation schädigt das Wirtsgitter durch Atomstöße und erzeugt Defekte. Die damit verbundenen hohen optischen Verluste verhindern die Wellenleitung. Es ist wünschenswert, diesen Gitterschaden durch Temperbehandlungen auszuheilen. Aber dieses Verfahren scheint nur bei LiNbO₃ und vielleicht einigen wenigen anderen Kristallen möglich. In den meisten Materialien führt das Tempern bei hohen Temperaturen nicht zu dem erwünschten eindomänigen Kristall, sondern zu polykristallinem Material mit Ausscheidungen und vielen ferroelektrischen Domänen, so daß keine nutzbaren ferroelektrischen Wellenleiter entstehen.

Eine andere Methode nutzt den permanenten Strahlenschaden aus, um Wellenleiter zu erzeugen. Dabei kommt vor allem die Implantation leichter Ionen, wie zum Beispiel Helium (He)- oder Wasserstoff (H)-Ionen, in Betracht. Bei leichten Ionen ist der erzeugte Strahlenschaden am Ende des Ionenpfades konzentriert ( 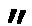 End-of-range-damage 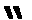 ). Der oberflächennahe Bereich wird vergleichsweise geringfügig geschädigt. Das geschädigte Kristallvolumen in der Tiefe zeigt einen geringeren Brechungsindex. Auf diese Weise ist es möglich, Licht zwischen der Oberfläche des Kristalls und dem geschädigten Volumen in der Tiefe zu führen. Dieses Verfahren ist zum Beispiel aus 3, 4, oder 5 bekannt um planare Wellenleiter in zahlreichen Oxiden herzustellen.

Im einzelnen trifft dazu ein Ionenstrahl 11, hier He, mit einer Energie im Bereich von 1 bis 3 MeV auf den Kristall 12. Bei Protonen (H) sind geringere Energien im Bereich von beispielsweise 0,2 MeV bis 1 MeV erforderlich.

Die He-Ionen werden im Kristall 12 abgebremst und kommen in einer Tiefe von beispielsweise 1 µm bis 10 µm zur Ruhe. Der Kristall 12 erfährt dabei, insbesondere im Bereich 13 eine Gitterschädigung. Demgegenüber wird der durchstrahlte Bereich 14 vergleichsweise schwach geschädigt.

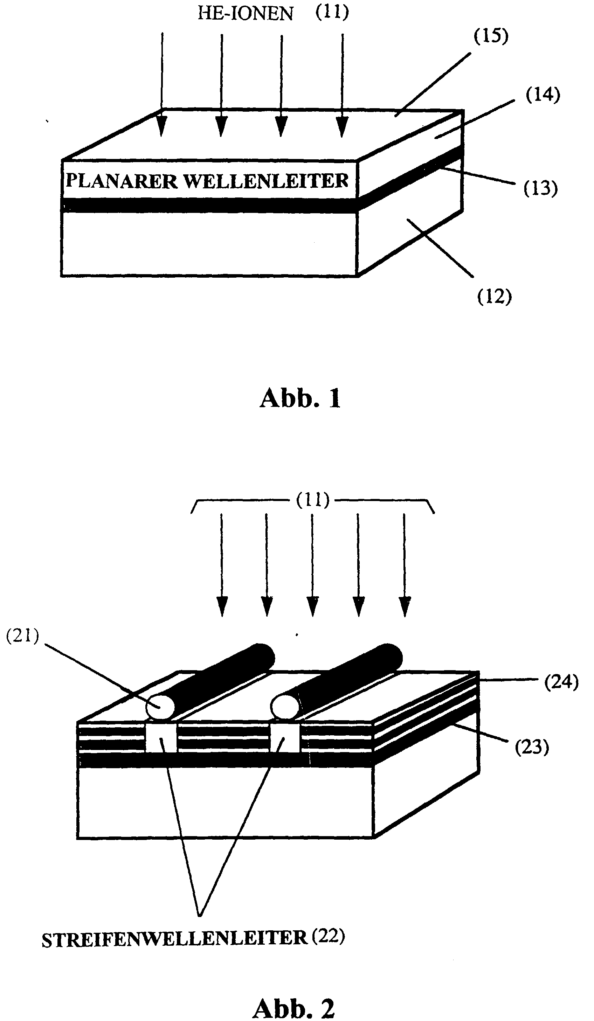

Der durchstrahlte Bereich 14 wird begrenzt von der Kristalloberfläche 15 und dem geschädigten Bereich 13. Im Bereich 14 kann Licht geführt werden, weil im Bereich 13 der Brechungsindex gegenüber 14 abgesenkt ist. Der in Figur 1 dargestellte Wellenleiter ist im Ergebnis ein planarer Wellenleiter [Ref. 6].

Für viele Anwendungen ist es bedeutsam, einen Streifenwellenleiter ( 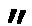 strip waveguide, channel waveguide 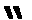 ) einzusetzen, weil sie besser an Glasfasern ankoppelbar sind. Außerdem wird die Leistung des Lichtes im Streifenwellenleiter auf ein engeres Volumen konzentriert als im planaren Wellenleiter. Damit wird der Wirkungsgrad markant erhöht, was sich für viele Anwendungen der nicht-linearen Optik begünstigend auswirkt.

Figur 2 zeigt, wie man durch eine Maske 21, die beispielsweise durch Wolfram-Drähte 21 realisiert wird, in einem zweiten Arbeitsgang oberhalb der planaren Barriere 23 durch sukzessive Implantation mit niederen Energien weitere Barrieren 24 erzeugen kann. Nicht implantiert wird nur der Bereich unter den Drähten 21, sodaß im Ergebnis ein Streifenwellenleiter 22 entsteht [Ref. 7,8].

Nachteilig bei den bekannten Verfahrensweise ist die Notwendigkeit mehrerer Implantationsschritte zur Bildung eines Streifenleiters.

Es ist deshalb Aufgabe der Erfindung, einen Streifenwellenleiter zu schaffen, sowie ein Verfahren zur Herstellung eines solchen bereitzustellen, bei dem mehrere Implantationen mit unterschiedlichen Energien vermieden werden. Außerdem ist es Aufgabe der Erfindung eine dazu geeignete Maske bereitzustellen.

Die Aufgabe wird gelöst durch einen Streifenwellenleiter gemäß der Gesamtheit der Merkmale nach Anspruch 1. Die Aufgabe wird ferner gelöst durch ein Verfahren gemäß der Gesamtheit der Merkmale nach Anspruch 4. Schließlich wird die Aufgabe gelöst durch eine Maske nach Anspruch 8. Weitere zweckmäßige oder vorteilhafte Ausführungsformen oder Varianten finden sich in den auf jeweils einen dieser Ansprüche rückbezogenen Unteransprüchen.

Es wurde erkannt, eine neuartige Maskentechnik einzusetzen, die in einem einzigen Implantationsgang die Herstellung von Streifenwellenleitern ermöglicht.

Im Ergebnis beinhaltet die Erfindung einen neuen Streifenwellenleiter und ein neues, vereinfachtes Verfahren, um integrierte optische Streifenwellenleiter mit Hilfe der Ionenimplantation herzustellen. Insbesondere in Betracht kommen dazu ferroelektrische, optische Einkristalle und Schichten, aber auch an eine Vielzahl anderer Materialien zur Bildung des Wellenleiters.

Die Erfindung ist im weiteren an Hand von Figur und Ausführungsbeispielen näher erläutert. Es zeigt:
Fig. 1: planarer Wellenleiter gemäß Stand der Technik;
Fig. 2: Streifenwellenleiter gemäß Stand der Technik;
Fig. 3: Erfindungsgemäßer Streifenwellenleiter;
Fig. 4: Erfindungsgemäßer Streifenwellenleiter;
Fig. 5: Meßergebnisse des erfindungsgemäßen Streifenwellenleiters nach Figur 4.
Fig. 6: Zwei gekoppelte Wellenleiter.

### Ausführungsbeispiele

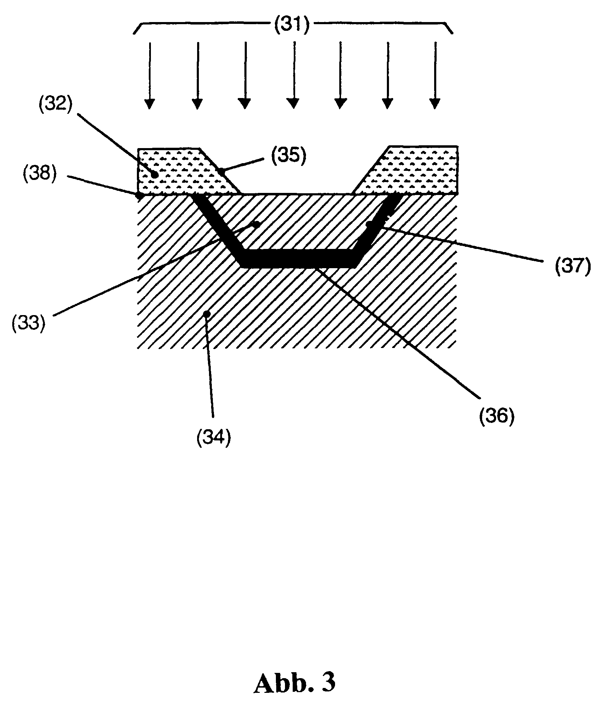

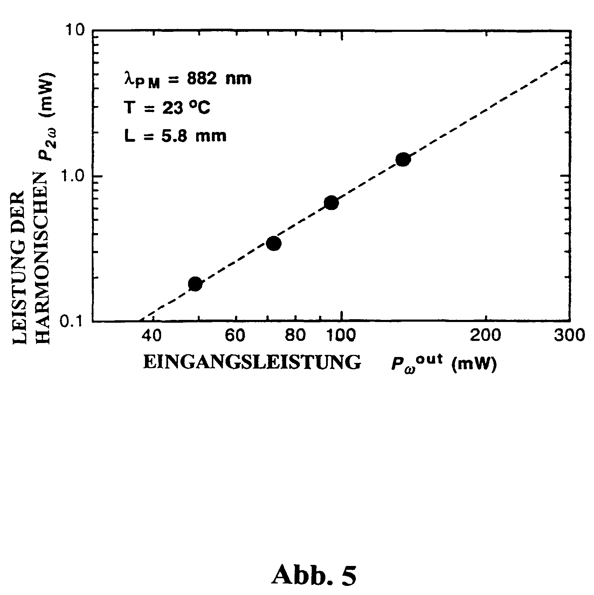

Eine schematische Darstellung des erfindungsgemäßen Verfahrens zur Herstellung eines Streifenleiters ist in Figur 3 gezeigt. Der Ionenstrahl 31 (wie zum Beispiel H oder He) trifft dazu auf eine Kristallprobe 34, die großflächig mit einer lithographisch strukturierten Maske 32 abgedeckt ist. In dem zur Ausbildung des Wellenleiters vorgesehenen Bereich ist die Maske entfernt und der Kristall 34 ist direkt dem Ionenstrahl 31 zugänglich. Das erfindungsgemäße Verfahren erfolgt sodann mit Hilfe des Einsatzes einer geeigneten Maske, mit sanft abgeschrägten Kanten 35. Dadurch wird erreicht, daß der Barrierenboden 36 unterhalb der Maskenöffnung durch sanft ansteigende Barrierenkanten 37 stetig bis zur Oberfläche 38 des Kristalls fortgesetzt wird.

Eine steile Kante 35 würde im Grenzfall eines senkrechten Kantenabbruches gar keine stetigen Barrierenkanten 37 ergeben, sondern nur den in Figur 3 horizontal gezeichneten Barrierenboden 36. Die für die Ausbildung eines Streifenwellenleiters notwendigen Seitenwände 37 würden fehlen. Das erfindungsgemäße Verfahren soll vorzugsweise mit einer relativ dicken Maske durchgeführt werden. Damit wird erreicht, daß die hochenergetischen Ionen vollständig abgebremst werden.

Außerdem ist es vorteilhaft, wenn diese Maske kontrolliert abgeschrägte Kanten besitzt. Die Herstellung einer solchen Maske kann zum Beispiel durch spezielles Prozessieren einer vergleichsweise dicken Photolack-Maske erfolgen. Alternativ kann ein anderer Ansatz darin bestehen, eine mikromechanisch gefertigte, in sich stabile Maske herzustellen und sodann eine solche Maske auf den Kristall 34 aufzulegen. Als Festkörpermaske bietet sich insbesondere Silizium als Maskenmaterial an, das mit dem Verfahren der Mikromechanik und der anisotropen Ätztechnologie bearbeitet werden kann.

Ein ferroelektrischer KNbO₃-Einkristall wird so geschnitten und poliert, daß die kristallographischen a- und b-Richtungen in der Ebene der Oberfläche liegen. Die kristallographische c-Richtung soll vorzugsweise senkrecht zur Oberfläche liegen. Der Kristall soll von guter optischer Qualität sein und keine ferroelektrischen Domänen aufweisen.

Ein solcher Kristall kann auf einer Unterlage angeklebt und bei 4000 Umdrehungen pro Minute mit einm AZ-Photolack 4562 bedeckt werden. Dieser Lack wird dann zum Beipsiel für 40 Minuten bei 90 °C ausgeheizt, um die volle Lackdicke zu stabilisieren. Die typische Lackdicke beträgt 5 µm bis zu 10 µm.

Anschließend wird der belackte Kristall von der Unterlage abgelöst. Der Kristall wird sodann auf der Unterseite mit absorbierender Farbe lackiert. Auf diese Weise vermeidet man Reflexionen von der Rückseite, die die Kantenqualität bei dem folgenden Belichtungsschritt verschlechtern. Danach kann der Kristall vorsichtig auf einer Unterlage aufgeklebt werden. Als nächster Schritt ist eine Randentlackung vorzunehmen, wie in der Mikrolithographie üblich.

Die eigentliche Strukturierung erfolgt dann mit Hilfe einer für den erfindungsgemäßen Wellenleiter vorgesehenen Chrommaske, wobei eine Belichtung von 26 Sekunden besonders günstige Kantenformen ergibt, wenn sich eine Entwicklung in einem AZ 400 K Entwickler anschließt. Es wurde bei einer Verdünnung von 1:4 eine Entwicklungszeit von 120 Sekunden gewählt.

Im Anschluß an die Maskenherstellung wird die Ionenimplantation durchgeführt. Als Ionenenergie kann zum Beispiel 2 MeV bei He-Ionen gewählt werden. Der He-Strahl wird gleichmäßig über die Probenoberfläche gescannt. Die Implantationsdosis beträgt vorzugsweise 7.5 * 10¹⁴ bis 3 * 10¹⁵ Ionen/cm².

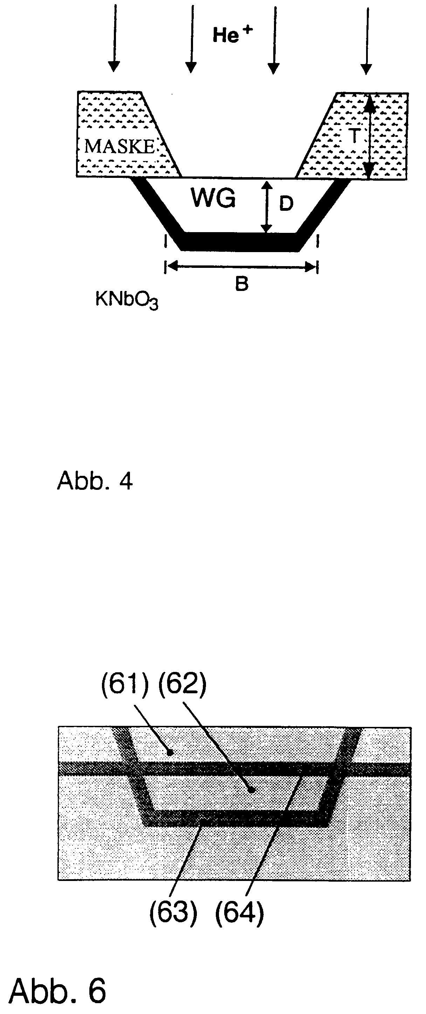

In der Figur 4 ist ein erfindungsgemäßer Wellenleiter auf der Basis des KNbO₃ gezeigt:

Die Maskendicke T dieses Wellenleiters betrug 6 µm, die He-Ionenenergie 2 MeV; außerdem hatte die Implantationsdosis einen Wert von 7.5 * 10¹⁴ Ionen/cm². Der erzeugte Wellenleiter hatte eine Tiefe von D = 4,5 µm und eine mittlere Breite B = 18 µm. Die Wellenleitungsverluste betrugen 3 dB/cm. Eingekoppeltes Laserlicht im Bereich von 50 mW bis zu 150 mW unter Leistung wurde mit einer Effizienz in der Größe von 10% W⁻¹ cm⁻² von der Wellenlänge 880 nm auf die Wellenlänge 440 nm frequenzverdoppelt.

In der Figur 5 ist das Ergebnis eines solchen erfindungsgemäßen Wellenleiters gezeigt. Die Leistung des frequenzverdoppelten blauen Laserlichts ist über der Leistung des infraroten eingekoppelten Lichtes dargestellt. Dieses Resultat beweist die Leistungsfähigkeit der vorgestellten neuen Wellenleiterherstellungstechnik.

In Figur 6 wird eine Erweiterung der erfindungsgemäßen Wellenleiterstruktur gezeigt. Der Wellenleiter wird durch eine zusätzliche planare Implantation in zwei gekoppelte Wellenleiter aufgeteilt. Die zusätzliche planare Implantation erzeugt eine zusätzliche Barriere 64. Die Implantation zur Erzeugung dieser Barriere kann vor Aufbringen der Maske oder nach Entfernung der Maske erfolgen.

Die "Höhe der Barriere", d.h. die optische Trennung der beiden Wellenleiter, kann durch Variation der Implantationsdosis eingestellt oder verändert werden. Je kleiner die Implantationsdosis ist, desto stärker sind die benachbarten Wellenleiter miteinander gekoppelt. Die Kopplung zwischen den Wellenleitern 61 und 62 kann auf diese Weise eingestellt werden. Die Umlaufende Barriere 63 wird nach dem erfindungsgemäßen Verfahren hergestellt.

### Literaturliste:

1. H. Nishihara, M. Haruna, T. Suhara "Optical Integrated circuits", Mc Graw-Hill, New York, 1989
2. P. R. Ashley, W. S. C. Chang, Ch. Buchal, D. K. Thomas "Guided Wave Modulators in Ti Ion Implanted LiNbO₃ Waveguides", IEEE Journ. Lightwave Techn. 7 (1989) 855-861
3. P. D. Townsend "Ion Implantation in Electrooptic Materials", Cryst. Latt. Def. and Amorph Mat. 18 (1989) 377-389
4. P. D. Townsend "Ion Implanted Waveguides and Waveguide Lasers", Nucl. Instr. and Meth. Phys. Res. B65 (1992) 243-250
5. Ch. Buchal, S. P. Withrow, C. W. White, D. B. Poker "Ion Implantation of Optical Materials", Ann. Rev. Mat. Sci. 24 (1994) 125-157
6. D. Fluck, R. Irmscher, Ch. Buchal, P. Günter, "Tailoring of Optical Planar Waveguides in KNbO₃ by MeV He Ion Implantation", Ferroelectrics 128 (1992) 79-84
7. D. Fluck, P. Günter, M. Fleuster, Ch. Buchal, "Low-Loss Optical Channel Waveguides in KNbO₃ by Multiple Energy Ion Implantation" J. Appl. Phys. 72 (1992) 1671-1675
8. M. Fleuster, Ch. Buchal, D. Fluck, P. Günter, "Ion Implanted Optical Waveguides in KNbO₃ for Efficient Blue Light Second Harmonic Generation" Nucl. Instr. and Meth. in Phys. Res. B80/81 (1993) 1150-1153

## Patentansprüche

1. Wellenleiter oder Streifenleiter, **gekennzeichnet durch** eine oder mehrere in einem Substrat (Kristall) mit Hilfe von Ionen ausgebildete, schräge (d.h. von senkrecht oder waagerecht zur Kristalloberfläche verschiedener Orientierung) Wandungen.

2. Wellenleiter oder Streifenleiter nach Anspruch 1, **gekennzeichnet durch** eine oder mehrere im Kristall vollständig durch Ionen ausgebildete Wandungen.

3. Wellenleiter oder Streifenleiter nach Anspruch 1 oder 2 mit einer oder mehreren weiteren Implantationsbereichen zur Trennung eines Bereichs in mehreren Wellen- oder Streifenleiterbereichen.

4. Verfahren zur Herstellung eines Wellen- oder Streifenleiters mit Hilfe der Ionenimplantation und Maskentechnik, **dadurch gekennzeichnet, daß** die Ionen mit Hilfe einer Maske in einem Substrat derart implantiert werden, daß eine oder mehrere zur Begrenzung des auszubildenden Wellenleiters vorgesehenen, schrägen Wandungen erhalten werden.

5. Verfahren nach Anspruch 4, **dadurch gekennzeichnet, daß** eine Maske eingesetzt wird, die eine Maskenrandausbildung aufweist, die bei Implantation bewirkt, daß die diese Maskenrandausbildung durchtretenden Ionen eine schräge Wandausbildung des Wellenleiters bilden.

6. Verfahren nach Anspruch 4, **dadurch gekennzeichnet, daß** eine Maske eingesetzt wird, die eine lateral verteilte Variation der Maskendicke, insbesondere im Bereich des Randes aufweist, die bei Implantation bewirkt, daß die diesen mit Dickenvariation beaufschlagten Maskenbereich durchtretenden Ionen eine schräge Wandausbildung des Wellenleiters bilden.

7. Verfahren nach Anspruch 4, 5 oder 6, **dadurch gekennzeichnet, daß** das Material der Maske aus Silizium besteht.

8. Maske für die Herstellung eines Wellen- oder Streifenleiters nach einem der Ansprüche 1 bis 7, **gekennzeichnet durch** eine Maskenrandausbildung, die bei Implantation bewirkt, daß die diese Maskenrandausbildung durchtretenden Ionen eine schräge Wandausbildung des Wellen- oder Streifenleiters bilden.

9. Maske für die Herstellung eines Wellen- oder Streifenleiters nach einem der Ansprüche 1 bis 7, **gekennzeichnet durch** eine lateral verteilte Variation der Maskendicke, insbesondere im Bereich des Randes, die bei Implantation bewirkt, daß die diesen mit Dickenvariation beaufschlagten Maskenbereich durchtretenden Ionen eine schräge Wandausbildung des Wellen- oder Streifenleiters bilden.

10. Maske nach Anspruch 8 oder 9, **durch gekennzeichnet durch** Silizium als Maskenmaterial.

11. Verfahren nach einem der vorhergehenden Ansprüchen, **dadurch gekennzeichnet, daß** eine zusätzliche bzw. weitere trennende Barriere eingeführt wird, die wenigstens zwei Wellenleiter mit definierter Kopplung entstehen läßt.

12. Verfahren nach Anspruch 11, **dadurch gekennzeichnet daß** die zusätzliche Barriere mit Hilfe der Ionenimplantation hergestellt wird.
